# EUROPEAN PATENT APPLICATION

(11) **EP 1 712 831 A1**
(43) Date of publication of application: **18.10.2006**
(21) Application number: 04798225.1
(22) Date of filing: 08.11.2004
(51) Int. Cl.: F17C 9/02, B60P 3/22

(54) **MOBILE LNG REGASIFICATION PLANT**

(30) Priority: 22.12.2003 ES 200303020
(71) Applicant: ROS ROCA INDOX EQUIPOS E INGENIERIA, S.L., 25300 Tarrega (ES)
(72) Inventor: ROCA ENRICH, Ramon, c/o ROS ROCA, S.A., E-25300 Tarrega (Lleida) (ES)
(74) Representative: Aragones Forner, Rafael Angel
(86) International application number: PCT/ES2004/000498
(87) International publication number: WO 2005/061950

(57) **Abstract**

The invention relates to a mobile LNG regasification plant comprising a plurality of components which are compactly mounted on a platform that is pulled by a vehicle. The aforementioned components comprise a cryogenic storage tank for LNG, an atmospheric vaporizer, a relief valve for low-temperature gas, an outlet pressure regulator, an odorizing drum, a pneumatically-actuated valve, tank level and pressure transmitters, gas temperature safety thermostat and probe, and a control panel which triggers the sending of compressed air in order to supply gas, thereby closing the corresponding fluid dynamic system. The control panel is provided with telematic means such as to enable communication with the control centre responsible for supervising operation and for planning the refilling of the tank with liquid.

## Description

### OBJECT OF THE INVENTION

The present invention has as its object a mobile LNG regasification plant.

### FIELD OF THE INVENTION

The mobile LNG regasification plant being the object of the present invention is in a position to be operated at any required location.

### BACKGROUND OF THE INVENTION

The satellite liquefied natural gas regasification plants have the drawback of being set up on a given location and of hence being only in a position to be operated at their place of installation, said plants being thus inoperative in case of trouble or lack of supply.

All this highlights the need for regasification plants that are both mobile and in a position to be operated at any required location since there is a great number of circumstances that can possibly arise, such as the stoppage of the supply of natural gas from the supply system or from a regasification plant, the temporary supplies of natural gas till the arrival of the gas supply infrastructure (said gas supply being normally carried out through a pipe system), the temporary commissioning tests of natural gas-fuelled co-generation plants, etc.

The aforementioned drawbacks have now been totally obviated by means of the mobile regasification plant of the present invention.

### SUMMARY OF THE INVENTION

The mobile LNG regasification plant of the invention comprises the basic elements as regards the tank, vaporiser, odoriser and others making up the satellite liquefied natural gas regasification plants.

According to what has been set forth above the mobile LNG regasification plant being the object of the present invention is essentially characterised in that it consists in a mobile facility comprising a plurality of constituent elements being compactly assembled as a unit on a platform and/or semitrailer being hauled by a tractor head and being thus taken to the delivery place, said unit is fit to be autonomously operated, said plurality of constituent elements comprises a number of main elements consisting in a cryogenic storage tank for LNG, an atmospheric vaporiser preferentially being of the finned tube type, a primary and secondary relief valve for low-temperature gas, an outlet pressure regulator, a THT odorising drum, and a pneumatically-actuated valve; instrumentation elements consisting in tank level/pressure transmitters and gas temperature safety probe/thermostat; and a control panel receiving the tank level, tank pressure and gas temperature signals through the instrumentation elements and sending the actuating signals triggering the sending of compressed air in order to supply the gas thereby closing the corresponding fluid dynamic circuit, said plurality of main and instrumentation elements and the control panel make up a circuit unit wherein the liquefied natural gas being stored in the storage tank is supplied to the atmospheric vaporiser wherein it is gasified through heat exchange with the environment, and the thus gasified LNG is thereupon adjusted to the delivery pressure and is finally odorised through a partial saturation of the gas flow; and said pneumatically-actuated valve stops the gas supply when the gas temperature becomes too low.

According to the invention the control panel is provided with telematic means for sending the aforementioned level, pressure and temperature signals to the control centre at all times monitoring the operation and planning the refilling of the tank with liquid.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In said drawings:
Fig. 1 is a perspective view of the mobile plant of the invention being hauled by the corresponding vehicle.
Fig. 2 illustrates the diagram of the circuit being the object of the mobile plant.

### DETAILED DESCRIPTION OF A PREFERRED EMBODIMENT

According to the drawings the mobile LNG regasification plant of the invention consists in a mobile facility comprising a plurality of constituent elements making up the basic elements of a satellite liquefied natural gas (LNG) regasification plant, said basic elements being compactly assembled as a unit on a platform and/or semitrailer (P) being hauled by a tractor head (T) of the type of a combination vehicle or the like being fit to take the mobile plant to the desired location where the supply is supposed to take place.

The mobile regasification plant of the invention is fit to be operated in an autonomous manner.

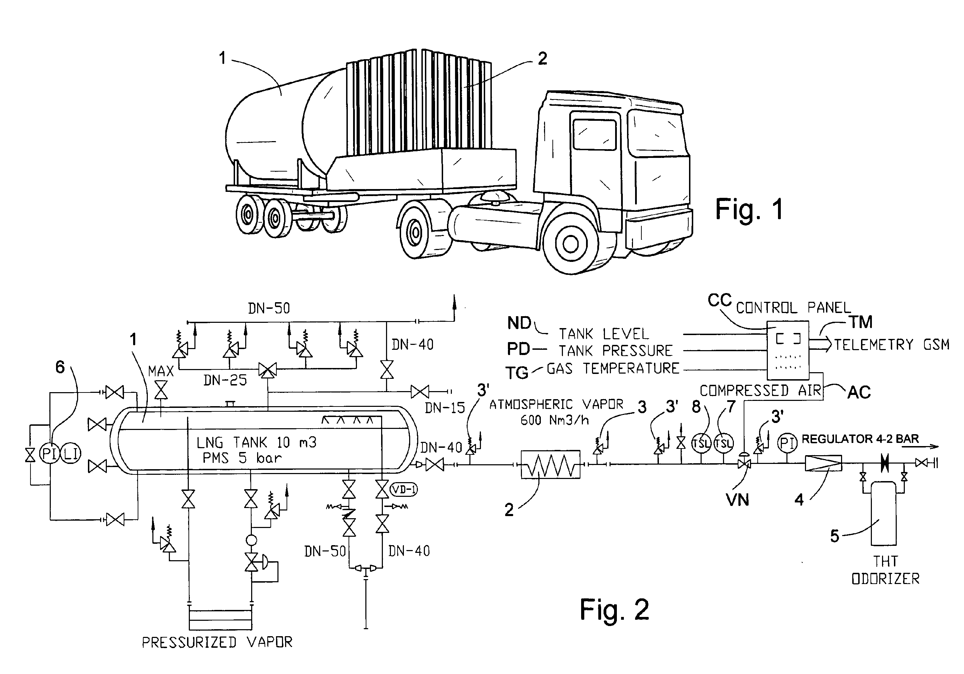

As shown in the drawings, specially in the circuit diagram being shown in Fig. 2, the plurality of constituent elements of the mobile regasification plant of the present invention comprises a number of main elements of the system making up the plant consisting in the cryogenic storage tank for LNG being designated at (1), a finned tube atmospheric vaporiser (2), a primary and secondary relief valve for low temperature gas being designated at (3) and (3'), respectively, an outlet pressure regulator (4), and a THT odorising drum (5).

Said plurality of constituent elements comprises instrumentation elements consisting in a pressure transmitter (6) for the pressure reigning in the tank (1), a differential pressure transmitter providing an indication of the level in the tank (1), a gas temperature PT probe (7), and a gas temperature safety thermostat (8).

The aforementioned plurality of main and instrumentation elements is completed with the control panel (CC) receiving the signals being indicative of the tank level (ND), the tank pressure (PD) and the gas temperature (TG) through the instrumentation elements and sending the actuating signals triggering the sending of compressed air (AC) in order to supply the gas thereby closing the corresponding fluid dynamic circuit of the mobile plant in question being diagrammatically shown in Fig. 2.

In said circuit the liquefied natural gas (LNG) being stored in the storage tank (1) is supplied to the atmospheric vaporiser (2) wherein it is gasified through heat exchange with the environment, and the thus gasified LNG is thereupon adjusted (4) to the delivery pressure and is finally odorised (5) through a partial saturation of the gas flow.

The circuit comprises a pneumatically-actuated valve (VN) being installed upstream, said valve being fit to stop the gas supply when the gas temperature becomes too low (the state corresponding to a saturated vaporiser).

The control panel (CC) is provided with telematic means (TM), such as a GSM modem for sending the aforementioned level (ND), pressure (PD) and temperature (TG) signals to the general control centre -not shown- being located at a remote location and at all times monitoring the operation and planning the refilling of the storage tank (1) with liquid LNG.

According to the invention and as a matter of preference, the storage tank (1) has a capacity of 10 cu.mtrs. with a gauge pressure of 5 bar, the finned atmospheric vaporiser has an emission capacity of 600 N cu.mtrs./hr., and the outlet pressure of the regulator is comprised between 2 and 4 bar, and as for the instrumentation and as a matter of preference the range or interval is of 4-20 mA in the tank pressure transmitter, 4-20 mA in the differential pressure transmitter for the tank level, and 4-20 mA in the PT100 probe for the gas temperature.

## Claims

1. A mobile LNG regasification plant comprising the basic elements as regards the tank, vaporiser, odoriser and others making up a stationary, satellite liquefied natural gas regasification plant; **characterised in that** it consists in a mobile facility comprising a plurality of constituent elements being compactly assembled as a unit on a platform and/or semitrailer (P) being hauled by a tractor head (T) and being thus taken to the delivery place, said unit is fit to be autonomously operated, said plurality of constituent elements comprises a number of main elements consisting in a cryogenic storage tank for LNG (1), an atmospheric vaporiser (2) preferentially being of the finned tube type, a primary and secondary relief valve for low-temperature gas (3) and (3'), respectively, an outlet pressure regulator (4), a THT odorising drum (5), and a pneumatically-actuated valve (VN); instrumentation elements consisting in tank level/pressure transmitters (6) and gas temperature safety probe (7)/thermostat (8); and a control panel (CC) receiving the tank level (ND), tank pressure (PD) and gas temperature (TG) signals through the instrumentation elements and sending the actuating signals triggering the sending of compressed air (AC) in order to supply the gas thereby closing the corresponding fluid dynamic circuit, said plurality of main and instrumentation elements and the control panel make up a circuit unit wherein the liquefied natural gas (LNG) being stored in the storage tank (1) is supplied to the atmospheric vaporiser (2) wherein it is gasified through heat exchange with the environment, and the thus gasified LNG is thereupon adjusted (4) to the delivery pressure and is finally odorised (5) through a partial saturation of the gas flow; and said pneumatically-actuated valve (VN) stops the gas supply when the gas temperature becomes too low.

2. A mobile LNG regasification plant as per the preceding claim, **characterised in that** the control panel (CC) is provided with telematic means (TM) for sending the aforementioned level (ND), pressure (PD) and temperature (TG) signals to the control centre at all times monitoring the operation and planning the refilling of the tank with liquid.
